# EUROPÄISCHE PATENTANMELDUNG

(11) **EP 1 303 104 A2**
(43) Veröffentlichungstag der Anmeldung: **16.04.2003**
(21) Anmeldenummer: 02022034.9
(22) Anmeldetag: 01.10.2002
(51) Int. Cl.: H04L 29/08

(54) **Verfahren zur Replikation von Daten in einem Datennetz**

(30) Priorität: 04.10.2001 DE 10148877
(71) Anmelder: SIEMENS AKTIENGESELLSCHAFT, 80333 München (DE)
(72) Erfinder: Kroesa, Erhard, 82256 Fürstenfeldbruck (DE); Schneider, Werner, 81245 München (DE)

(57) **Zusammenfassung**

Die Erfindung betrifft ein Verfahren zum Verteilen von Daten in einem Datennetz (30), in dem eine Vielzahl von Datenverarbeitungsanlagen (24, 26, 28) eingebunden ist und zumindest einige dieser Datenverarbeitungsanlagen (24, 26, 28) Daten verarbeiten. Die Daten sind Programmpakete und werden von mindestens einem Datenbank-Server (10) mittels Datenbank-Replikationsmechanismen an die entsprechenden Datenverarbeitungsanlagen (24, 26, 28) verteilt.

## Beschreibung

Die Erfindung betrifft ein Verfahren zum Verteilen von Daten in einem Datennetz gemäß dem Oberbegriff des Patentanspruchs 1.

Häufig ist es in einem Netz von Datenverarbeitungsanlagen - im weiteren als Datennetz bezeichnet -, beispielsweise auch in einem Netz mit rechnergesteuerten Vermittlungsstellen und/oder Nebenstellenanlagen, für einen reibungslosen Betrieb des Datennetzes notwendig, den Software-Stand der einzelnen Datenverarbeitungsanlagen konsistent zu halten. Darunter wird insbesondere das fortlaufende Aktualisieren der im Datennetz eingesetzten Software - beispielsweise durch Updates - verstanden.

Bekannt sind Verfahren zur Datenbankreplikation, die in der Regel dazu benutzt werden, ASCII-Daten innerhalb eines verteilten Datenbanksystems untereinander abzugleichen. Beispielsweise ist aus "Guide to Informix - Enterprise Replication", Version 7.3, February 1998, Part No. 000-4350 ein derartiges Verfahren zur Datenbankreplikation bekannt.

Verteilte Datenbanksysteme für ASCII-Daten werden häufig im Handel eingesetzt. Hierbei existiert in einer Zentrale eine Datenbank mit Artikeln, die gleichzeitig auch in Filialen zur Verfügung gestellt werden. Wird in der Zentrale ein Update der Artikel vorgenommen, so ist es für einen konsistenten Datenstand erforderlich, dieses Update auch in den Filialen durchzuführen. Bei den abzugleichenden und zu transferierenden Daten handelt es sich dabei in der Regel um reine ASCII-Daten.

Datennetze, in denen ein Abgleich und eine Transaktion verschiedener Datenstände erforderlich sein kann, existieren nicht nur im Handel, sondern auch in der Telekommunikationsindustrie. Elemente moderner Telekommunikationsnetze sind in der Regel softwaregestützt, d.h. sie umfassen für Telekommunikationsanwendungen spezialisierte Rechner, die Programme zum Betreiben der Elemente ausführen. Derartige Elemente können beispielsweise Vermittlungsstellen oder Nebenstellenanlagen (PBX: Private Branche Exchange) sein. Um einen reibungslosen Betrieb eines derartigen rechnergestützten Telekommunikationsnetzes gewährleisten zu können, muß dafür Sorge getragen werden, daß die Programme der einzelnen Vermittlungsstellen oder Nebenstellenanlagen stets auf einem aktuellen Software-Stand sind.

Die Wartung der einzelnen Programme kann lediglich bei kleineren Daten- oder Telekommunikationsnetzen mit wenigen Datenverarbeitungsanlagen bzw. Vermittlungsstellen und/oder Nebenstellenanlagen manuell durchgeführt werden. Ab einer gewissen Netzgröße ist jedoch ein derartiges manuelles Warten aufwendig und daher zu teuer. Um diesen Aufwand zu verringern und gleichzeitig die Kosten zu senken, werden daher in der Regel binäre Software-Daten und/oder Programmpakete durch speziell dafür vorgesehene Wartungsprogramme über einen zentralen Verteiler an Datenverarbeitungs- bzw. Telekommunikationsanlagen überspielt. Bei der Transaktion der binären Programmpakete auf die Datenverarbeitungs- bzw. Telekommunikationsanlagen ist eine Steuerung erforderlich, die vor allem eine konsistente, fehlerfreie und vollständige Datenübermittlung gewährleistet. Je nach Ausbaustufe des Daten- bzw. Telekommunikationsnetzes ist zudem das Wartungsprogramm zu ändern, das an die Datenverarbeitungs- bzw. Telekommunikationsanlagen und das Netz speziell angepaßt ist.

Ein Nachteil der oben genannten Wartungsprogramme besteht darin, daß diese von Hand, also individuell gestartet werden müssen. In der Regel wird dies von einem Administrator des Daten- bzw. Telekommunikationsnetzes vorgenommen, der für die Wartung der Netz-Software verantwortlich ist. Zu den Aufgaben des Administrators gehören u.a. das Einspielen aktueller Software in eine Datenbank, das Starten des Wartungsprogramms sowie das Überwachen des Update-Vorgangs. Je nach Größe des Netzes kann ein derartiger Update-Vorgang sehr zeitaufwendig sein. Daher sind solche halbautomatischen Update-Vorgänge in der Regel recht teuer.

Ein weiterer Nachteil der bekannten Wartungsprogramme für Daten- und Telekommunikationsnetze liegt in der fehlenden Universalität. Die Wartungsprogramme sind hochgradig auf ein bestimmtes Netz und beispielsweise dessen Aufbau spezialisiert. Eine Änderung des Netzes bedingt demnach regelmäßig eine aufwendige Anpassung des Wartungsprogramms.

Aufgabe der vorliegenden Erfindung ist es daher, ein Verfahren zum Verteilen von Daten in einem Datennetz anzugeben, mit dem zum einen eine ständige Aktualität der Software des Datennetzes, genauer gesagt von dessen Datenverarbeitungsanlagen gewährleistet ist und das den Zeitaufwand zum Aktualisieren der Software verringert. Zudem soll es universell für beliebige Datennetze einsetzbar sein.

Diese Aufgabe wird durch ein Verfahren zum Verteilen von Daten in einem Datennetz mit den Merkmalen des Patentanspruchs 1 gelöst. Vorteilhafte Ausgestaltungen des Verfahrens ergeben sich aus den abhängigen Patentansprüchen.

Der Erfindung liegt die Idee zugrunde, in der Datenverarbeitungswelt bewährte und weit verbreitete Datenbank-Replikationsmechanismen zum Aktualisieren der Programmsoftware eines Datennetzes einzusetzen. Hierbei wird ausgenutzt, daß die Programmsoftware eines Datennetzes häufig im Prinzip wie eine verteilte Datenbank betrachtet werden kann. Für verteilte Datenbanken existieren viele bewährte Replikationsmechanismen. Beispielhaft wird hier auf den bereits weiter oben angeführten Replikationsmechanismus der Firma Informix Software, Inc. verwiesen. Bekanntermaßen wird unter einer Replikation in einem verteilten Datenbank-Managementsystem das Kopieren der Datenbank oder von Teilen der Datenbank auf andere Bereiche in einem Netzwerk verstanden. Die Replikation gewährleistet die Integrität der verteilten Datenbanken.

Konkret betrifft die Erfindung ein Verfahren zum Verteilen von Daten in einem Datennetz, in dem eine Vielzahl von Datenverarbeitungsanlagen eingebunden ist und zumindest einige der Datenverarbeitungsanlagen die gleichen Daten verarbeiten. Die Daten sind Programmpakete und werden von mindestens einem Datenbank-Server mittels Datenbank-Replikationsmechanismen an die entsprechenden Datenverarbeitungsanlagen verteilt. Hierdurch wird auf relativ einfache Art und Weise die Integrität der verteilten Programmpakete im Datennetz gewährleistet. In der Regel ist zum Verteilen der Programmpakete aufgrund der Datenbank-Replikationsmechanismen kein manueller Eingriff erforderlich. Die Replikation läuft sozusagen voll automatisch ab. Hierdurch können Kosten eingespart werden. Der Administrator eines Datennetzes ist dadurch von der zeitaufwendigen und kostenintensiven Aufgabe des Verteilens der Programmpakete im Datennetz und dem Sicherstellen der Integrität der verteilten Programmpakete nahezu vollständig entlastet.

Ein weiterer Vorteil besteht darin, daß derartige Datenbank-Replikationsmechanismen als Software-Standardmodule zur Verfügung stehen und relativ einfach und kostengünstig in ein Datennetz, insbesondere auf dem mindestens einen Datenbank-Server, installiert werden können. Vor allem die in den Datenbanken-Replikationsmechanismen enthaltenen Methoden des Abgleichs von Programmpaketen und der Transaktionssteuerung der Verteilung haben sich in der Praxis bewährt und ermöglichen auf einfache Art und Weise das Erledigen der ansonsten zeitaufwendigen Aufgabe der Aktualisierung des Softwarebestands in einem Datennetz.

Vorzugsweise umfassen die Programmpakete Binärdateien, die vom Datenbank-Server bereitgestellt werden. Bei einer Verteilung von Binärdateien entfällt eine weitere Verarbeitung, insbesondere Vorbereitung zum Ausführen der verteilten Programmpakete in den Datenverarbeitungsanlagen selbst. Vereinfacht ausgedrückt kann mit den Binärdateien die Software im Datennetz ohne Zusatzaufwand direkt aktualisiert werden.

Vorteilhafterweise werden die zu aktualisierenden binären Daten, d.h. Programmpakete, in sogenannten "blobs" (binary large objects) vom Datenbank-Server zu den entsprechenden Datenverarbeitungsanlagen übertragen. Moderne Datenbank-Replikationsmechanismen unterstützten dabei zusätzlich zu der Replikation von ASCII-Daten eine Replikation von blob-Daten.

In kleineren Datennetzen kann das Verteilen der Programmpakete direkt über einen Datenbank-Server erfolgen. In größeren Datennetzen mit einer Vielzahl von Datenverarbeitungsanlagen kann es jedoch günstiger sein, den Datenbank-Server mit mindestens einem lokalen Dienstrechner zu verbinden. Der lokale Dienstrechner ist mit mindestens einer Datenverarbeitungsanlage kommunikationsmäßig verbunden. Die Verteilung der Programmpakete erfolgt dann über die Dienstrechner, die sozusagen Zwischenstationen darstellen. Hierarchisch gesehen startet die Verteilung der Programmpakete beim Datenbank-Server und läuft über die Dienstrechner bis in die einzelnen, softwaremäßig bzw. programmtechnisch zu aktualisierenden Datenverarbeitungsanlagen.

In einer derzeit besonders bevorzugten Ausführungsform des Verfahrens gewährleistet ein Datenbank-Managementsystem durch Replikation die Integrität der verteilten Programmpakete. Das Datenbank-Managementsystem stellt im Prinzip eine Softwareebene zwischen einer Datenbank und einem Benutzer dar. Es handhabt Anforderungen vom Benutzer für bestimmte Datenbankaktionen und ermöglicht hierbei die Kontrolle hinsichtlich Sicherheit und Datenintegrität.

Aufgrund des Datenbank-Managementsystems wird einem Administrator des Datennetzes die Arbeit wesentlich erleichtert. Er kann auf den Softwarebestand des Datennetzes mittels des Datenbank-Managementsystems zugreifen, wodurch er eine einheitliche beispielsweise grafische Benutzeroberfläche zur Bedienung des Zugriffs auf den Softwarebestand des Datennetzes benutzt. Über das Datenbank-Managementsystem kann daher der Benutzer auf einfache Art und Weise aktualisierte Programmpakete zum Verteilen im Datennetz in die Datenbank einspielen und manuell einen weitgehend vollautomatischen ablaufenden Aktualisierungsvorgang im Datennetz starten.

Vorzugsweise ist das Datenbank-Managementsystem auf den mindestens einen Datenbank-Server und die lokalen Dienstrechner verteilt. In diesem Fall stellt das Datenbank-Managementsystem eine verteilte Datenbank dar. Hierdurch wird die Gesamtleistung der Datenbank beträchtlich erweitert.
Durch ein derartiges System können auch sehr große Datennetze mit mehreren tausend Datenverarbeitungsanlagen einfach gewartet werden.

Wie bereits erwähnt, kann der Datenbank-Server eine Datenbank aufweisen, welche aktuelle Versionen der Programmpakete umfaßt und aus der beim Replizieren Programmpakete geladen werden.

Besonders vorteilhaft kann das erfindungsgemäße Verfahren in Telekommunikationsnetzen angewendet werden. In diesem Fall sind zumindest einige der Datenverarbeitungsanlagen rechnergestützte Telekommunikationsanlagen, welche die Programmpakete ausführen. Derartige rechnergestützte Telekommunikationsanlagen sind heute in modernen Telekommunikationsnetzen üblich. Beispielsweise können diese Telekommunikationsanlagen Vermittlungsstellen und/oder Nebenstellenanlagen sein. In einem derartigen Fall sind die Programmpakete vorzugsweise Teile der Betriebssoftware für die Vermittlungsstellen und/oder Nebenstellenanlagen.

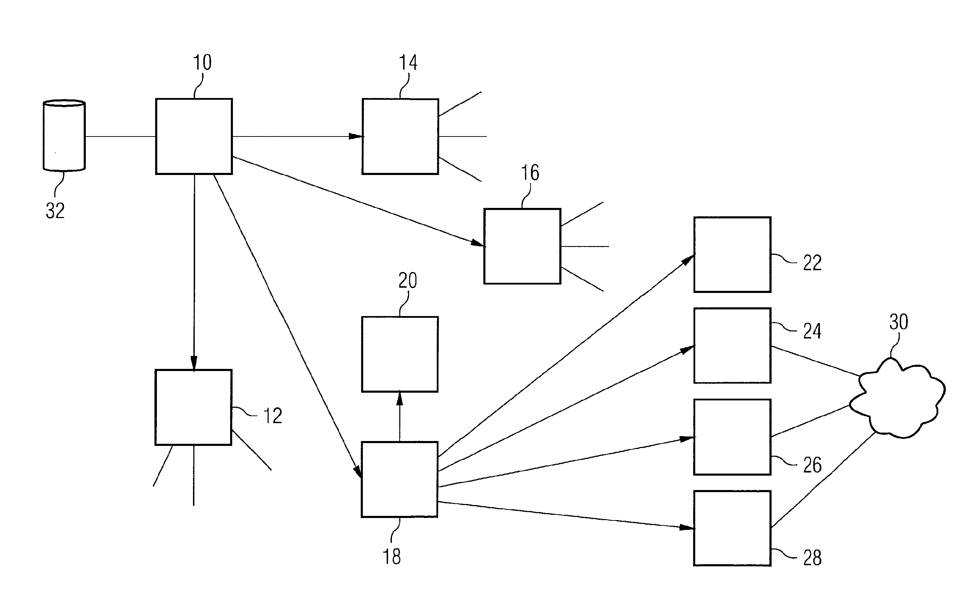

Nachfolgend wird die Erfindung anhand eines Ausführungsbeispiels in Verbindung mit der einzigen Zeichnung erläutert. Die Zeichnung zeigt ein Ausführungsbeispiel eines Telekommunikationsnetzes mit einem Zentralrechner und lokalen Dienstrechnern, über welche die Verteilung von Programmpaketen an Telekommunikationsanlagen erfolgt.

Ein Zentralrechner 10 ist als Datenbank-Server vorgesehen und mit vier lokalen Dienstrechnern 12, 14, 16 und 18 verbunden. Die lokalen Dienstrechner 12, 14, 16 und 18 wiederum sind mit rechnergesteuerten Telekommunikationsanlagen verbunden, von denen beispielhaft drei Telekommunikationsanlagen mit den Bezugsziffern 24, 26 und 28 bezeichnet dargestellt sind. Die Telekommunikationsanlagen 24, 26 und 28 sind einerseits mit dem lokalen Dienstrechner 18 und andererseits mit einem Telekommunikationsnetz 30, beispielsweise einem PSTN (Public Switched Telephone Network) oder ISDN (Integrated Services Digital Network) verbunden. Die Verbindung der anderen lokalen Dienstrechner 12, 14 und 16 mit weiteren nicht dargestellten Telekommunikationsanlagen sind schematisch angedeutet.

Als weitere Elemente in dem Telekommunikationsnetz sind lokale Server 20 und 22 für Daten und Programme wie beispielsweise eine (relationale) Datenbank, die von verschiedenen Anbietern am Markt angeboten wird, vorgesehen. Die Server 20, 22 sind mit dem lokalen Dienstrechner 18 verbunden, d. h. dieser kann auf die Datenbank zugreifen. Eine Replikation von Programmpaketen, die der Zentralrechner 10 aus einer Datenbank 32 lädt, erfolgt über die lokalen Dienstrechner 12, 14, 16 und 18. Die Programmpakete wiederum werden von den zentralen Dienstrechnern 12, 14, 16 und 18 an die Telekommunikationsanlagen 24, 26 und 28 verteilt. Hierbei sorgen Datenbank-Replikationsmechanismen für eine weitgehend fehlerfreie Verteilung der Programmpakete.

Zusammenfassend wird durch die in den erwähnten Datenbank-Replikationsmechanismen enthaltene Transaktionssteuerung eine fehlerfreie, schnelle und einfache Verteilung von Programmpaketen in einem Telekommunikationsnetz im wesentlichen ohne manuellen Eingriff erreicht. Letztendlich führt dies zu Kosteneinsparungen, da ein Administrator des Telekommunikationsnetzes von der zeitraubenden Arbeit des Verteilens von Programmpaketen und Überwachen der Verteilung entlastet wird.

## Patentansprüche

1. Verfahren zum Verteilen von Daten in einem Datennetz (30), in dem eine Vielzahl von Datenverarbeitungsanlagen (24, 26, 28) eingebunden ist und zumindest einige dieser Datenverarbeitungsanlagen (24, 26, 28) die Daten verarbeiten,
**dadurch gekennzeichnet, daß**
die Daten Programmpakete sind, die von mindestens einem Datenbank-Server (10) mittels Datenbank-Replikationsmechanismen an die entsprechenden Datenverarbeitungsanlagen (24, 26, 28) verteilt werden.

2. Verfahren nach Anspruch 1,
**dadurch gekennzeichnet, daß**
ein Datenbank-Managementsystem durch Transaktionssteuerung die Integrität der verteilten Programmpakete gewährleistet.

3. Verfahren nach Anspruch 1 und 2,
**dadurch gekennzeichnet, daß**
der Datenbank-Server (10) eine Datenbank (32) aufweist, welche aktuelle Versionen der Programmpakete umfaßt und aus der beim Replizieren die Programmpakete geladen werden.

4. Verfahren nach Anspruch 1 und 2,
**dadurch gekennzeichnet, daß**
zumindest einige der Datenverarbeitungsanlagen (20, 22, 24, 26, 28) rechnergestützte Telekommunikationsanlagen (24, 26, 28) sind, welche die Programmpakete ausführen.

5. Verfahren nach Anspruch 1 und 2,
**dadurch gekennzeichnet, daß**
zumindest einige der Telekommunikationsanlagen Vermittlungsstellen und/oder Nebenstellenanlagen sind.

6. Verfahren nach Anspruch 1 und 2,
**dadurch gekennzeichnet, daß**
die Programmpakete Binärdateien umfassen, die vom Datenbank-Server (10) erstellt werden.

7. Verfahren nach Anspruch 6,
**dadurch gekennzeichnet, daß**
die Binärdateien in sogenannten "blobs" vom Datenbank-Server (10) an die Datenverarbeitungsanlagen (24, 26, 28) übermittelt werden.

8. Verfahren nach Anspruch 1 und 2,
**dadurch gekennzeichnet, daß**
der Datenbank-Server (10) mit mindestens einem lokalen Dienstrechner (12, 14, 16, 18) verbunden ist, der mit mindestens einer Datenverarbeitungsanlage (24, 26, 28) kommunizieren kann, und die Programmpakete vom Datenbank-Server (10) an den oder jeden lokalen Dienstrechner (12, 14, 16, 18) verteilt werden und der oder jeder Dienstrechner (12, 14, 16, 18) die Programmpakete an die angebundenen Datenverarbeitungsanlagen (24, 26, 28) übermittelt.

9. Verfahren nach Anspruch 1 und 2,
**dadurch gekennzeichnet, daß**
das Datenbank-Managementsystem auf dem mindestens einen Datenbank-Server (10) und die lokalen Dienstrechner (12, 14, 16, 18) verteilt ist.
